# EUROPEAN PATENT APPLICATION

(11) **EP 4 155 615 A1**
(43) Date of publication of application: **29.03.2023**
(21) Application number: 20936153.4
(22) Date of filing: 22.05.2020
(51) Int. Cl.: F24F 11/46, F24F 11/63, F24F 11/64, F24F 120/10

(54) **CONTROL DEVICE AND CONTROL METHOD**

(71) Applicant: MITSUBISHI ELECTRIC CORPORATION, Chiyoda-ku Tokyo 100-8310 (JP)
(72) Inventor: HASHIKAWA, Takahiro, Tokyo 100-8310 (JP); HAMADA, Mamoru, Tokyo 100-8310 (JP); HORIE, Hayato, Tokyo 100-8310 (JP)
(74) Representative: Studio Torta S.p.A.
(86) International application number: PCT/JP2020/020287
(87) International publication number: WO 2021/234943

(57) **Abstract**

A first power consumption estimation unit (122) estimates as a first power consumption, a power consumption generated in a first operation mode in which operation of an air conditioner is suspended at a timing when a room equipped with the air conditioner turns not to be used and the operation of the air conditioner is resumed so that a temperature of the room reaches a preset temperature at a timing when the room turns to be used. A second power consumption estimation unit (123) estimates as a second power consumption, a power consumption generated in a second operation mode in which the operation of the air conditioner is continued even while the room is not being used. A determination unit (124) compares the first power consumption with the second power consumption to determine whether to suspend or continue the operation of the air conditioner at the timing when the room turns not to be used.

## Description

### Technical Field

The present disclosure relates to control for an air conditioner.

### Background Art

In recent years, installation of air conditioners into schools is underway, and an air conditioner is starting to be used during classes in each classroom. At schools, teachers and students move from one classroom to another depending on the content of a class, and therefore the presence/absence of a person in the classroom depends on a timetable. Thus, the use/non-use of the air conditioners depends on the timetable.

In view of these points, in order to reduce a power consumption of the air conditioner, there is a technology to suspend operation of the air conditioner while a classroom is not being used (while a person is absent from the classroom) along a timetable input in advance (for example, Patent Literature 1).

### Citation List

### Patent Literature

Patent Literature 1: JP 2004-251509 A

### Summary of Invention

### Technical Problem

On the other hand, it has been found that if a room is not being used for a short period of time, a cumulative power consumption can be reduced by continuing the operation of the air conditioner rather than suspending the operation of the air conditioner. If there is a large discrepancy between a room temperature at which the operation of the air conditioner is resumed and a preset temperature, the air conditioner consumes more power than it should. In such a case, it is possible to reduce the power consumption by continuing the operation of the air conditioner to maintain the room temperature.

A power consumption in which the operation of the air conditioner is resumed after the air conditioner is suspended and a power consumption in which the operation of the air conditioner is continued vary with changes in an air conditioning load such as the length of a period during which a room is not being used, changes in the outdoor air temperature during that period, and changes in an internal heating value.

In the technology of Patent Literature 1, the operation of the air conditioner is suspended even if the power consumption can be reduced by continuing the operation of the air conditioner. Accordingly, the technology of Patent Literature 1 has a problem in that the power consumption of the air conditioner has not been sufficiently reduced.

It is a primary object of the present disclosure to solve the above-described problem. More specifically, it is a primary object of the present disclosure to effectively reduce a power consumption of an air conditioner.

### Solution to Problem

A control device according to the present disclosure includes:
a power consumption estimation unit to estimate as a first power consumption, a power consumption generated in a first operation mode in which operation of an air conditioner is suspended at a timing when a room equipped with the air conditioner turns not to be used and the operation of the air conditioner is resumed so that a temperature of the room reaches a preset temperature at a timing when the room turns to be used, and estimate as a second power consumption, a power consumption generated in a second operation mode in which the operation of the air conditioner is continued even while the room is not being used; and
a determination unit to compare the first power consumption with the second power consumption to determine whether to suspend or continue the operation of the air conditioner at the timing when the room turns not to be used.

### Advantageous Effects of Invention

According to the present disclosure, it is possible to effectively reduce a power consumption of an air conditioner.

### Brief Description of Drawings

Fig. 1 is a diagram illustrating a configuration example of an air conditioning system according to Embodiment 1.
Fig. 2 is a diagram illustrating an example of an operation interface according to Embodiment 1.
Fig. 3 is a diagram illustrating a configuration example of a control device according to Embodiment 1.
Fig. 4 is a diagram illustrating an example of a first power consumption according to Embodiment 1.
Fig. 5 is a diagram illustrating an example of a second power consumption according to Embodiment 1.
Fig. 6 is a flowchart illustrating an example of operation of the control device according to Embodiment 1.
Fig. 7 is a diagram illustrating an example of a message according to Embodiment 1.
Fig. 8 is a diagram illustrating an example of a room temperature change amount at an operation suspending state according to Embodiment 2.
Fig. 9 is a flowchart illustrating an example of operation of the control device according to Embodiment 2.
Fig. 10 is a diagram illustrating an example of an operation interface according to Embodiment 3.
Fig. 11 is a diagram illustrating an example of an operation interface according to Embodiment 3.

### Description of Embodiments

Embodiments will be described hereinafter with reference to the drawings. In the following description of the embodiments and the drawings, portions denoted by the same reference signs indicate the same or corresponding portions.

### Embodiment 1.

### *** Description of Configuration ***

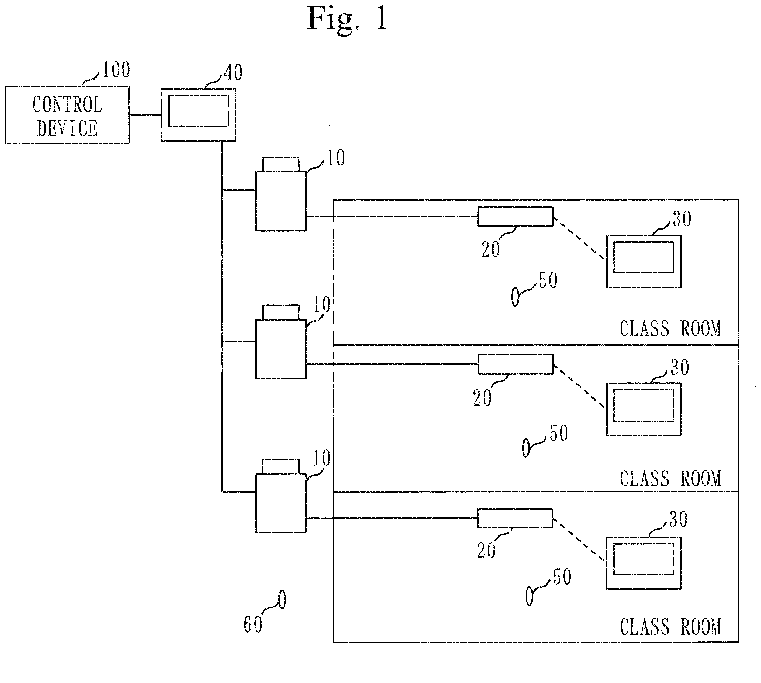

Fig. 1 illustrates a configuration example of an air conditioning system according to the present embodiment.

In the present embodiment, the description will be given with using a classroom as an example of a room. However, the air conditioning system according to the present embodiment can be applied to a room other than the classroom as long as an air conditioner is equipped in the room and a time period when the air conditioner is used and a time period when the air conditioner is not used are distinguished from each other. For example, the air conditioning system according to the present embodiment can also be applied to conference rooms of companies or the like, rental spaces, rental conference rooms, or the like.

The air conditioning system according to the present embodiment includes an outdoor unit 10, an indoor unit 20, a remote controller 30, a centralized controller 40, a room temperature detecting means 50, an outdoor air temperature detecting means 60, and a control device 100.

The indoor unit 20 and the remote controller 30 are equipped in each classroom. The remote controller 30 can operate the corresponding indoor unit 20.

In the present embodiment, there is a one-to-one correspondence between the outdoor unit 10 and the indoor unit 20. The outdoor unit 10 and the indoor unit 20 are collectively called an air conditioner.

The centralized controller 40 can operate a plurality of outdoor units 10 and a plurality of indoor units 20.

The room temperature detecting means 50 is installed in each classroom to detect a temperature of a classroom. The room temperature detecting means 50 may be installed in the indoor unit 20.

Further, the outdoor air temperature detecting means 60 is installed outdoors to detect outdoor air temperature. The outdoor air temperature detecting means 60 may be installed in the outdoor unit 10.

The control device 100 is a computer. An operation procedure for the control device 100 corresponds to a control method.

The control device 100 controls operation of the air conditioner in each classroom via the centralized controller 40.

More specifically, the control device 100 determines whether an operation mode in which the operation of the air conditioner is suspended when the classroom is not being used and resumed just before the classroom turns to be used (hereinafter referred to as a "first operation mode") or an operation mode in which the operation of the air conditioner is continued when the classroom is not being used (hereinafter referred to as a "second operation mode") consumes less power. When the power consumption of the first operation mode is less, the control device 100 suspends the operation of the air conditioner at a timing when the classroom turns not to be used and resumes the operation of the air conditioner just before a time when the classroom turns to be used. On the other hand, when the power consumption of the second operation mode is less, the control device 100 continues the operation of the air conditioner.

At school, a time period when the classroom is not being used is based on a class timetable, and therefore the control device 100 can decide to suspend/continue the operation of the air conditioner based on the class timetable.

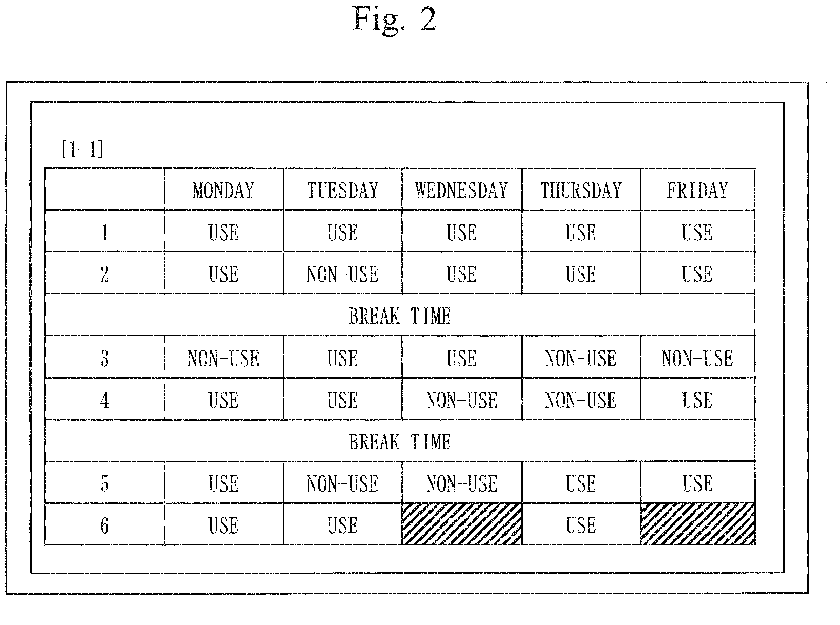

Fig. 2 illustrates an example of information of a usage schedule displayed on the remote controller 30. The remote controller 30 is provided with input fields corresponding to the class timetable that has been set in advance. When a classroom administrator (for example, a teacher) inputs whether or not to use the classroom in each class, the information of the usage schedule exemplified in Fig. 2 is generated.

Information of the class timetable is input form the remote controller 30 or the centralized controller 40. For example, the information of the class timetable is input as follows:
First period: 8:50-9:35
Second period: 9:40-10:25
Break time: 10:25-10:45
Third period: 10:45-11:30
Fourth period: 11:35-12:20
Break time: 12:20-14:00
Fifth period: 14:00-14:45
Sixth period: 14:50-13:35

Depending on the input information of the class timetable, the information of the usage schedule to be displayed on the remote controller 30 exemplified in Fig. 2 is generated.

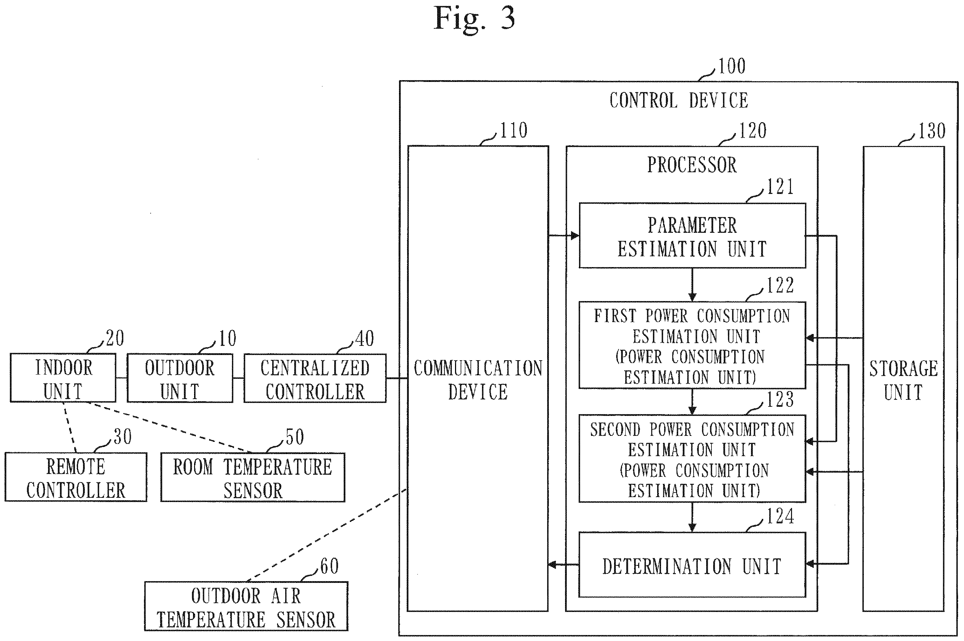

Fig. 3 illustrates a configuration example of the control device 100.

The control device 100 is provided with a communication device 110, a processor 120, and a storage device 130, as hardware configurations.

The communication device 110 performs communication with the centralized controller 40. The communication device 110 can communicate with the outdoor unit 10 via the centralized controller 40. In addition, the communication device 110 can communicate with the indoor unit 20 via the centralized controller 40 and the outdoor unit 10. Further, the communication device 110 can communicate with the remote controller 30 and the room temperature detecting means 50 via the centralized controller 40, the outdoor unit 10, and the indoor unit 20. Further, the communication device 110 can communicate with the outdoor air temperature detecting means 60.

Note that communication paths illustrated in Fig. 3 are an example. For example, the communication device 110 may directly communicate with each of the centralized controller 40, the outdoor unit 10, the indoor unit 20, the remote controller 30, and the room temperature detecting means 50. Further, the communication device 110 may communicate with the outdoor air temperature detecting means 60 via other devices.

The processor 120 runs programs.

The control device 100 is provided with a parameter estimation unit 121, a first power consumption estimation unit 122, a second power consumption estimation unit 123, and a determination unit 124, as function constituents.

The storage device 130 stores the programs that implement functions of the parameter estimation unit 121, the first power consumption estimation unit 122, the second power consumption estimation unit 123, and the determination unit 124.

The processor 120 executes these programs to carry out operation of the parameter estimation unit 121, the first power consumption estimation unit 122, the second power consumption estimation unit 123, and the determination unit 124 to be described below.

Fig. 3 schematically illustrates a state in which the processor 120 executes the programs that implement the functions of the parameter estimation unit 121, the first power consumption estimation unit 122, the second power consumption estimation unit 123, and the determination unit 124.

The parameter estimation unit 121 estimates parameters used to control the operation of the air conditioner.

The parameter estimation unit 121, for example, estimates a time period when the classroom is not being used (hereinafter referred to as a "non-use time period") as a parameter used to control the operation of the air conditioner.

Further, the parameter estimation unit 121 estimates an air conditioning load as a parameter used to control the operation of the air conditioner. The parameter estimation unit 121, for example, estimates the difference between the outdoor air temperature and the room temperature, and an amount of heat generated inside the classroom, as the air conditioning load.

The first power consumption estimation unit 122 estimates a first power consumption. The first power consumption is a power consumption generated in the first operation mode. The first operation mode is, as outlined, an operation mode in which the operation of the air conditioner is suspended at the timing when the classroom equipped with the air conditioner turns not to be used and the operation of the air conditioner is resumed so that the temperature of the classroom reaches a preset temperature at a timing when the classroom turns to be used. The timing when the classroom turns not to be used may be a time when the classroom turns not to be used (for example, the end time of a class) or may be a time after a specified time period (for example, 1 minute) has passed from the time when the classroom turns not to be used. Further, the timing when the classroom turns to be used may be a time when the classroom turns to be used (for example, the start time of a class) or may be a time before a specified time period (for example, 1 minute) back from the time when the classroom turns to be used.

The first power consumption estimation unit 122 corresponds to a power consumption estimation unit together with the second power consumption estimation unit 123.

The second power consumption estimation unit 123 estimates a second power consumption. The second power consumption is, as outlined, a power consumption generated in the second operation mode. The second operation mode is, as outlined, an operation mode in which the air conditioner is continued even while the classroom is not being used.

The second power consumption estimation unit 123 corresponds to the power consumption estimation unit together with the first power consumption estimation unit 122.

The determination unit 124 compares the first power consumption with the second power consumption to determine whether to suspend or continue the operation of the air conditioner at the timing when the classroom turns not to be used.

When it is determined to suspend the operation of the air conditioner at the timing when the classroom turns not to be used, the determination unit 124 instructs the centralized controller 40 to suspend the operation of the air conditioner at the timing when the classroom turns not to be used. Further, the determination unit 124 instructs the centralized controller 40 to resume the operation of the air conditioner at a timing of resuming the operation of the air conditioner. The timing of resuming the operation of the air conditioner is a time obtained by subtracting a startup time period described below) from the timing when the classroom turns to be used (for example, the start time of a class).

### *** Description of Operation ***

The control device 100 follows the information of the usage schedule and the information of the class timetable of the classroom set by the remote controller 30 or the centralized controller 40 to determine whether to suspend the operation of the air conditioner or continue the operation of the air conditioner at the timing when the classroom turns not to be used.

More specifically, the parameter estimation unit 121 specifies the non-use time period with using the information of the usage schedule and the information of the class timetable. The control device 100 specifies a time period from the end time of a class period before a non-use class period to the start time of a class period next to the non-use class period, as the non-use time period.

In the information of the schedule in Fig. 2, the classroom is not being used during the third period on Monday. The end time of the second period is "10:25" and the start time of the fourth period is "11:35". Therefore, the parameter estimation unit 121 specifies "10:25-11:35" as the non-use time period.

In the information of the schedule in Fig. 2, the classroom is not being used during the third period and fourth period on Wednesday. The end time of the second period is "10:25" and the start time of the fifth period is "14:00". Therefore, the control device 100 specifies "10:25-14:00" as the non-use time period. Note that the control device 100 includes "Break time: 12:20-14:00" in the non-use time period in this example, but when students have lunch in the classroom during the break time, the parameter estimation unit 121 may exclude "Break time: 12:20-14:00" from the non-use time period. In this case, the parameter estimation unit 121 specifies "10:25-12:20" as the non-use time period.

Further, when the classroom is not being used during the sixth period, the parameter estimation unit 121 does not specify the non-use time period since it is not necessary to determine whether to suspend/continue the operation of the air conditioner.

Further, the parameter estimation unit 121 specifies the air conditioning load during the non-use time period. The parameter estimation unit 121, for example, estimates the difference between the outdoor air temperature and the room temperature during the non-use time period, as the air conditioning load. Specifically, the parameter estimation unit 121 estimates the difference between the outdoor air temperature and the room temperature during the non-use time period with using the room temperature and the outdoor air temperature obtained by the room temperature detecting means 50 and the outdoor air temperature detecting means 60.

Note that the parameter estimation unit 121 may estimate the air conditioning load by predicting the fluctuation of the outdoor air temperature during the non-use time period. In this way, the parameter estimation unit 121 can improve the accuracy of the air conditioning load.

Further, the first power consumption estimation unit 122 estimates the startup time period. The startup time period is a time period from when the air conditioner resumes operation in the first operation mode until when the temperature of the classroom reaches the preset temperature.

Then, the first power consumption estimation unit 122 estimates the power consumption (first power consumption) generated in the first operation mode based on the air conditioning load and the startup time period.

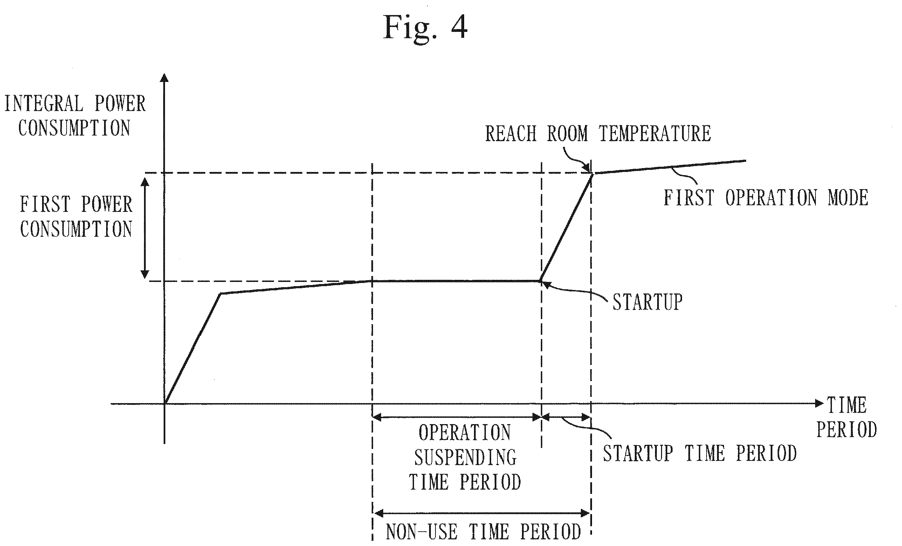

Fig. 4 illustrates an example of the first power consumption generated in the first operation mode.

A time period obtained by subtracting the startup time period from the non-use time period is an operation suspending time period.

The first power consumption is a power consumption generated during the non-use time period, however, since there is no power consumption generated during the operation suspending time period, a power consumption generated during the startup time period substantially corresponds to the first power consumption.

The first power consumption estimation unit 122 estimates the startup time period with using the air conditioning load and a startup time period correlation function generated in advance. The startup time period correlation function is a correlation function between the startup time period and the air conditioning load.

The first power consumption estimation unit 122 estimates the first power consumption with using the startup time period, the air conditioning load, and a first correlation function generated in advance. The first correlation function is a correlation function between the air conditioning load and a power consumption in a unit time period.

Further, the second power consumption estimation unit 123 estimates the power consumption (second power consumption) generated in the second operation mode based on the non-use time period and the air conditioning load.

In the second operation mode, the operation of the air conditioner continues during the non-use time period. Therefore, the second power consumption estimation unit 123 estimates a power consumption generated during the non-use time period, as the second power consumption.

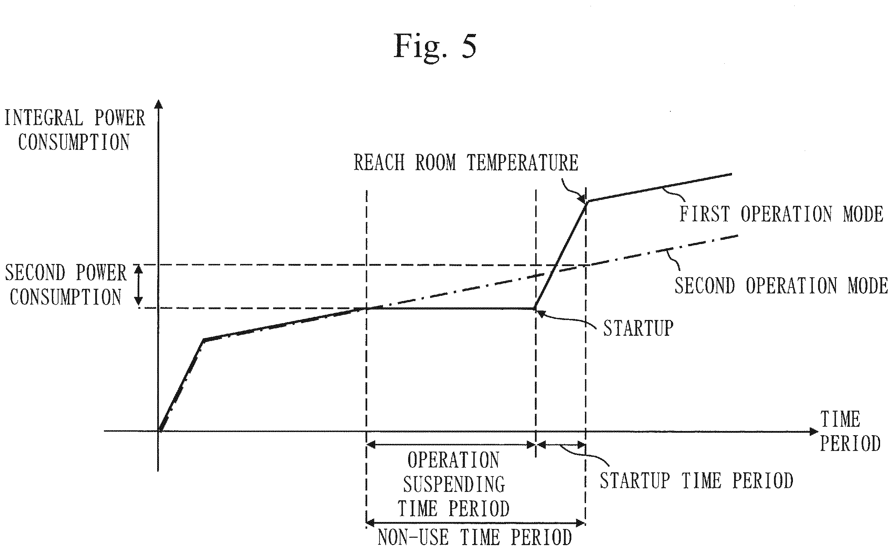

Fig. 5 illustrates an example of the second power consumption generated in the second operation mode.

The second power consumption is a power consumption generated during the non-use time period. The second power consumption is simply proportional to the non-use time period.

The second power consumption estimation unit 123 estimates the second power consumption with using the non-use time period, the air conditioning load, and a second correlation function generated in advance.

The second correlation function is a correlation function between the air conditioning load and a power consumption in a unit time period. The second correlation function may be the same correlation function as the first correlation function or may be a different correlation function.

The determination unit 124 compares the first power consumption with the second power consumption. Then, when the first power consumption is less than the second power consumption, the determination unit 124 suspends the operation of the air conditioner. On the other hand, when the second power consumption is less than or equal to the first power consumption, the determination unit 124 continues the operation of the air conditioner.

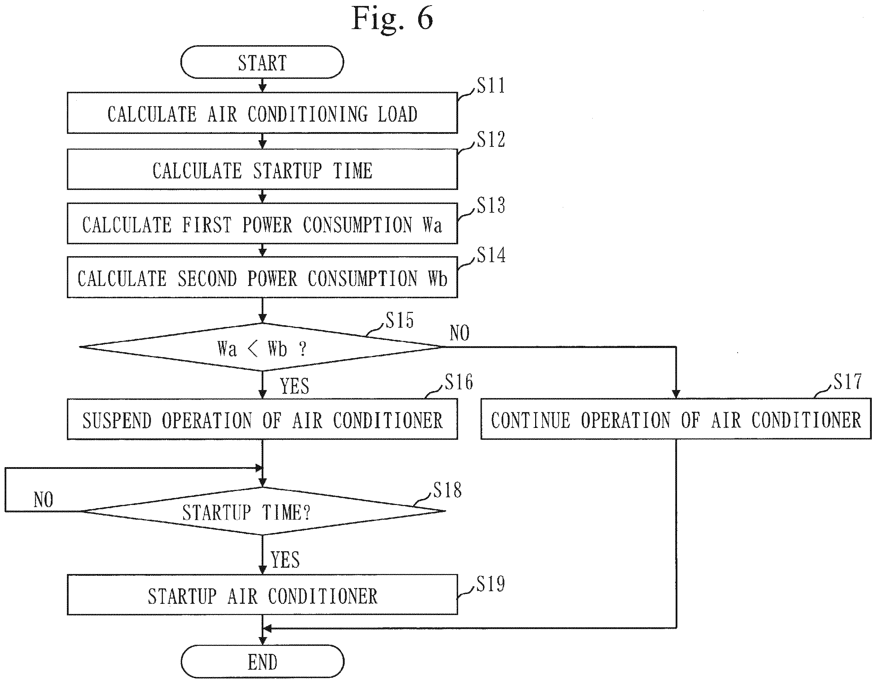

Fig. 6 illustrates an example of operation of the control device 100 according to the present embodiment.

The example of the operation of the control device 100 will be described below based on the flowchart of Fig. 6.

Note that the parameter estimation unit 121 have specified the non-use time period before starting the flow of Fig. 6 by the procedure described above. For example, the parameter estimation unit 121 have specified the non-use time period of a day, before the start of school.

First, in step S 11, the parameter estimation unit 121 calculates the air conditioning load at the start time of the non-use time period.

Next, in step S12, the first power consumption estimation unit 122 calculates the startup time period with using the air conditioning load and the startup time period correlation function.

Further, in step S13, the first power consumption estimation unit 122 calculates the first power consumption Wa with using the air conditioning load, the startup time period, and the first correlation function.

Then, in step S14, the second power consumption estimation unit 123 calculates the second power consumption Wb with using the air conditioning load and the second correlation function.

Then, in step S15, the determination unit 124 compares the first power consumption Wa with the second power consumption Wb.

When the first power consumption Wa is less than the second power consumption Wb, the determination unit 124 suspends the operation of the air conditioner in step S16. In this case, the determination unit 124 outputs a command to the centralized controller 40 to suspend operation of the outdoor unit 10 and the indoor unit 20.

On the other hand, the second power consumption Wb is less than or equal to the first power consumption, the determination unit 124 continues the operation of the air conditioner in step S17.

When the operation of the air conditioner is suspended in step S16, the determination unit 124 determines whether a startup time has come or not in step S18. The startup time is the start time of the startup time period illustrated in Fig. 3.

When the startup time has come, the determination unit 124 starts up the air conditioner in step S19. That is, the determination unit 124 resumes the operation of the air conditioner. In this case, the determination unit 124 outputs a command to the centralized controller 40 to start the operation of the outdoor unit 10 and the indoor unit 20.

In the flow of Fig. 6, it is determined whether to suspend or resume the operation of the air conditioner by comparing the first power consumption with the second power consumption (step S15 and step S16). Alternatively, the determination unit 124 may determine to continue the operation of the air conditioner when the room temperature detecting means 50 detects the presence of a person in the classroom at the start time of the non-use time period. In this case, step S11 to step S15 may be omitted.

Further, the first power consumption estimation unit 122 may calculate the startup time period and the first power consumption with using a startup correlation function and the first correlation function which have been generated in advance by a simulation. Similarly, the second power consumption estimation unit 123 may calculate the second power consumption with using the second correlation function generated in advance by a simulation.

In addition, the startup time period and the first power consumption may be calculated with using the startup correlation function and the first correlation function which have been generated in advance based on measured values. That is, the first power consumption estimation unit 122 can use the startup time period correlation function generated by analyzing the air conditioning load measured during the non-use time period in the classroom and the startup time period actually required when operating the air conditioner in the first operation mode. Further, the first power consumption estimation unit 122 can use the first correlation function generated by analyzing the air conditioning load measured during the non-use time period in the classroom and the first power consumption actually generated when operating the air conditioner in the first operation mode. The first power consumption in this case may be a value measured by a wattmeter or the like, or a value calculated from data such as the compressor frequency of the air conditioner. Similarly, the second power consumption estimation unit 123 may calculate the second power consumption with using the second correlation function generated based on measured values. That is, the second power consumption estimation unit 123 can use the second correlation function generated by analyzing the air conditioning load measured during the non-use time period in the classroom and the second power consumption actually generated when operating the air conditioner in the second operation mode. The second power consumption in this case may be a value measured by a wattmeter or the like, or a value calculated from data such as the compressor frequency of the air conditioner.

Further, the correlation functions may be corrected based on the difference between an actual value and a predicted value obtained by the correlation function. The accuracy of estimating the correlation functions is improved by such correction.

Note that the measured values used to generate the startup time period correlation function, the first correlation function, and the second correlation function need to be measured values obtained in a situation where there is no person in the classroom. Measured values obtained in a situation where there is a person in the classroom are not appropriate values for generating and correcting the correlation function because the air conditioning load changes due to the influence of heat generated by a human body. The presence/absence of a person in the classroom may be determined based on the information of the usage schedule and the information of the class timetable or determined by a human detection method such as an infrared sensor.

In the flow of Fig. 6, an example in which the determination unit 124 starts up the air conditioner at the startup time (step S18 and step S19) is described. The determination unit 124 may start up the air conditioner at a time other than the startup time. For example, the determination unit 124 may start up the air conditioner at the start time of the next class period.

Further, in order to reduce a computational load, the first power consumption estimation unit 122 may calculate the first power consumption with using a fixed time period as the startup time period without calculating the startup time period.

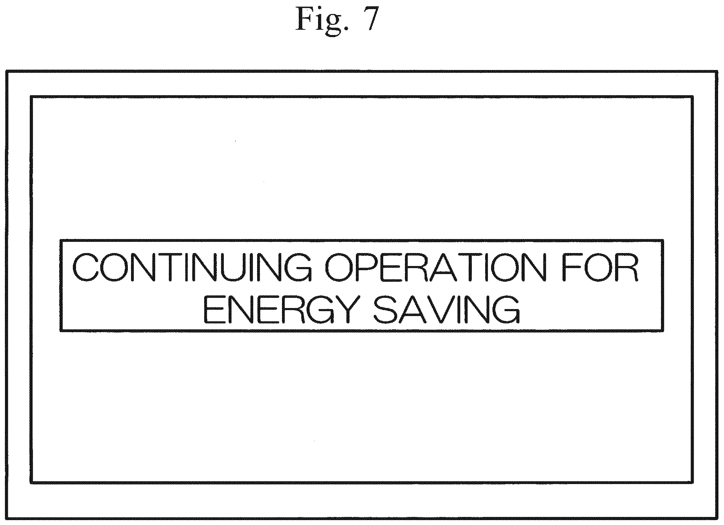

Further, when the operation of the air conditioner continues during the non-use time period in the case where the operation of the air conditioner is determined to continue in step S 17, it may be misunderstood that the operation of the air conditioner continues mistakenly. Therefore, when the determination unit 124 determines to continue the operation of the air conditioner in step S 17, the message exemplified in Fig. 7 is output to a device in the classroom, for example, to the remote controller 30. Further, by lighting a lamp of the indoor unit 20 or a lamp of the remote controller 30 or the like, the determination unit 124 may give notice of a message indicating that the operation of the air conditioner is continuing for energy saving.

### * * * Description of Effects of This Embodiment * * *

As described above, according to the present embodiment, a power consumption of an air conditioner can be effectively reduced by selecting an operation mode with less power consumption from either an operation mode in which the operation of the air conditioner is suspended or an operation mode in which the operation of the air conditioner is continued.

### Embodiment 2.

In the present embodiment, differences from Embodiment 1 will be mainly described.

Incidentally, matters that are not descried below are the same as those in Embodiment 1.

### *** Description of Configuration ***

A configuration example of the air conditioning system according to the present embodiment is as illustrated in Fig. 1.

Further, a configuration example of the control device 100 according to the present embodiment is as illustrated in Fig. 3.

### *** Description of Operation ***

A basic operation of the control device 100 is the same as that of Embodiment 1. Differences from Embodiment 1 will be described hereinafter.

In the present embodiment, the first power consumption estimation unit 122 estimates in response to the air conditioning load, a room temperature change amount at an operation suspending state (also simply referred to as a room temperature change amount hereinafter) which is an amount of change in the room temperature when the operation of the air conditioner is suspended. That is, the first power consumption estimation unit 122 estimates the temperature difference between the temperature of the classroom at the timing when the air conditioner suspends operation and the temperature of the classroom at the timing when the air conditioner resumes operation.

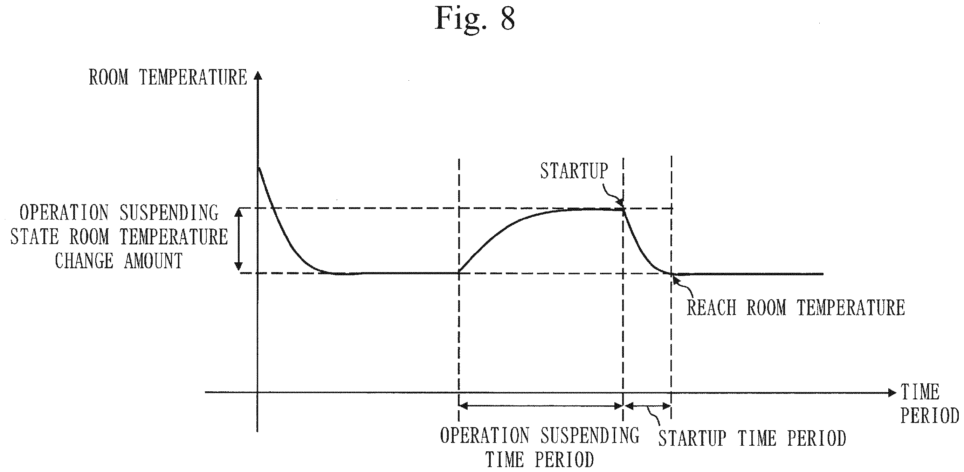

Fig. 8 illustrates an example of a room temperature transition at the operation suspending state of the air conditioner in a case of cooling operation. The room temperature change amount at the operation suspending state is the temperature difference between the temperature of the classroom at the start time of an operation suspending time period and the temperature of the classroom at the start time of the startup time period (at the startup time).

The first power consumption estimation unit 122, for example, estimates the room temperature change amount (temperature difference) with using a temperature difference correlation function generated in advance, the air conditioning load, and the operation suspending time period. The temperature difference correlation function is a correlation function between the air conditioning load and a room temperature change amount (temperature difference) in a unit time period.

Next, the first power consumption estimation unit 122 estimates the startup time period with using the estimated room temperature change amount (temperature difference). Further, the first power consumption estimation unit 122 estimates the first power consumption with using the estimated room temperature change amount (temperature difference) and the estimated startup time period.

For example, the first power consumption estimation unit 122 estimates the startup time period with using the startup time period correlation function which is a correlation function between the room temperature change amount and the startup time period. Further, the first power consumption estimation unit 122 estimates the first power consumption with using the startup time period and the first correlation function which is a correlation function between the room temperature change amount and a power consumption in a unit time period.

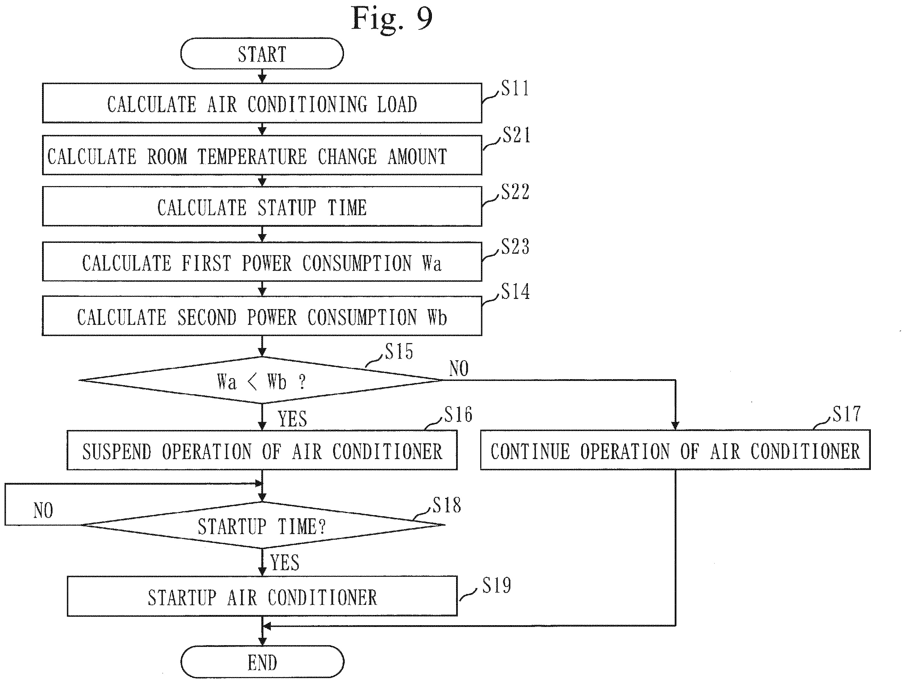

Fig. 9 illustrates an example of operation of the control device 100 according to the present embodiment.

The example of the operation of the control device 100 will be described below based on the flowchart of Fig. 9.

Since step S11 is the same as that illustrated in Fig. 6, the explanation is omitted.

In step S21, the first power consumption estimation unit 122 calculates the room temperature change amount with using the air conditioning load, the temperature difference correlation function, and the operation suspending time period.

In step S22, the first power consumption estimation unit 122 calculates the startup time period with using the room temperature change amount and the startup time period correlation function.

In step S23, the first power consumption estimation unit 122 calculates the first power consumption Wa with using the air conditioning load, the startup time period, and the first correlation function.

Since step S14 to step S19 are the same as those illustrated in Fig. 6, the explanation is omitted.

The first power consumption estimation unit 122 may calculate the room temperature change amount, the startup time period, and the first power consumption with using the temperature difference correlation function, the startup time period correlation function, and the first correlation function which have been generated in advance by a simulation.

In addition, the room temperature change amount, the startup time period, and the first power consumption may be calculated with using the temperature difference correlation function, the startup correlation function, and the first correlation function which have been generated in advance based on measured values.

Further, the correlation functions may be corrected based on the difference between an actual value and a predicted value obtained by the correlation function. The accuracy of estimating the correlation functions is improved by such correction.

### *** Description of Effects of This Embodiment ***

As described above, according to the present embodiment as well, a power consumption of an air conditioner can be effectively reduced by selecting an operation mode with less power consumption from either an operation mode in which the operation of the air conditioner is suspended and an operation mode in which the operation of the air conditioner is continued.

Further, in the present embodiment, the startup time period and the first power consumption can be calculated with higher accuracy than those in Embodiment 1.

That is, when the startup time period correlation function is generated based on the measured values in Embodiment 1, the startup time period can be measured only when the operation of the air conditioner is resumed after the operation of the air conditioner is suspended. Similarly, when the first correlation function is generated based on the measured values in Embodiment 1, the power consumption can be measured only when the operation of the air conditioner is resumed after the operation of the air conditioner is suspended.

In the present embodiment, both of the room temperature change amount measured in a case where the operation of the air conditioner is resumed after the operation of the air conditioner is suspended and the room temperature change amount measured in a case where the operation of the air conditioner is not resumed after the operation of the air conditioner is suspended can be used to generate the temperature difference correlation function. That is, in the present embodiment, the temperature difference between the room temperature at a time at which the operation of the air conditioner is suspended and the room temperature after a predetermined time period has passed from a time at which the operation of the air conditioner is suspended can be used to generate the temperature difference correlation function regardless of resumption of the operation of the air conditioner. Thus, measured values of the room temperature change amount can be obtained before and after school. Thus, the number of samples of the room temperature change amount can be increased, and therefore the temperature difference correlation function can be obtained with high accuracy. As a result, the startup time period and the first power consumption can be calculated with higher accuracy.

### Embodiment 3.

In the present embodiment, differences form Embodiment 1 will be mainly described.

Incidentally, matters that are not descried below are the same as those in Embodiment 1.

### *** Description of Configuration ***

A configuration example of the air conditioning system according to the present embodiment is as illustrated in Fig. 1.

Further, a configuration example of the control device 100 according to the present embodiment is also as illustrated in Fig. 3.

### *** Description of Operation ***

A basic operation of the control device 100 is the same as that of Embodiment 1. Differences from Embodiment 1 will be described hereinafter

In Embodiment 1, the first power consumption estimation unit 122 and the second power consumption estimation unit 123 estimate the first power consumption and the second power consumption based on the usage schedule of the classroom specified in advance. In the present embodiment, the first power consumption estimation unit 122 and the second power consumption estimation unit 123 estimate the first power consumption and the second power consumption based on the usage schedule of the classroom specified at any time.

In the present embodiment, for example, an administrator of the classroom is assumed to be able to input the non-use time period of the classroom at any time with the remote controller 30. Then, the parameter estimation unit 121 notifies the first power consumption estimation unit 122 and the second power consumption estimation unit 123 of the non-use time period specified at any time by the administrator of the classroom.

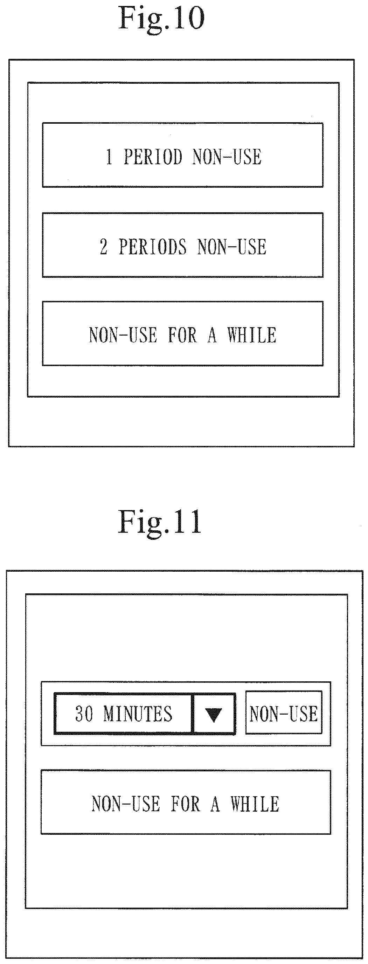

In the present embodiment, as illustrated in Fig. 10, buttons such as "1 period non-use", "2 periods non-use", and "non-use for a while" are provided on the remote controller 30. The administrator of the classroom specifies the non-use time period of the classroom by pressing these buttons.

When "1 period non-use" or "2 periods non-use" is pressed, the control device 100 performs the same processing as in Embodiment 1 or Embodiment 2.

When "non-use for a while" is pressed, the determination unit 124 suspends the operation of the air conditioner without determining whether to suspend the operation of the air conditioner or to continue the operation of the air conditioner.

Further, as illustrated in Fig. 11, the administrator of the classroom may be allowed to input a time period of non-use. The operation of the control device 100 in a case where the time period of non-use is input by the administrator of the classroom is the same as that of Embodiment 1 or Embodiment 2.

### *** Description of Effects of This Embodiment ***

According to the present embodiment, the information of the usage schedule illustrated in Fig. 2 is no longer necessary. Further, according to the present embodiment, it is possible to correspond to sudden schedule changes.

Embodiments 1 to 3 have been described above and two or more of these embodiments may be implemented in combination.

Alternatively, one of these embodiments may be implemented partially.

Alternatively, two or more of these embodiments may be implemented partially in combination.

Further, the configurations and procedures described above in these embodiments may be modified as necessary.

### *** Supplementary Description of Hardware Configuration ***

Finally, a supplementary description of the hardware configuration of the control device 100 will be given.

The processor 120 illustrated in Fig. 3 is an Integrated Circuit (IC) that performs processing.

The processor 120 is a Central Processing Unit (CPU), a Digital Signal Processor (DSP), or the like.

The storage device 130 illustrated in Fig. 3 is a Random Access Memory (RAM), a Read Only Memory (ROM), a flash memory, a Hard Disk Drive (HDD), or the like.

The communication device 110 illustrated in Fig. 3 is an electronic circuit that executes a communication process for data.

The communication device 110 is, for example, a communication chip or a Network Interface Card (NIC).

Further, an Operating System (OS) is also stored in the storage device 130. Then, at least a portion of the OS is executed by the processor 120.

While executing at least the portion of the OS, the processor 120 executes a program that implements functions of the parameter estimation unit 121, the first power consumption estimation unit 122, the second power consumption estimation unit 123, and the determination unit 124.

Through execution of the OS by the processor 120, task management, memory management, file management, communication control, or the like is carried out.

Further, at least any of information, data, signal vales, and variable values that indicate results of processes by the parameter estimation unit 121, the first power consumption estimation unit 122, the second power consumption estimation unit 123, and the determination unit 124 is stored in at least any of the storage device 130, and a register and a cache memory in the processor 120.

Further, the program that implements the functions of the parameter estimation unit 121, the first power consumption estimation unit 122, the second power consumption estimation unit 123, and the determination unit 124 may be stored in a portable recording medium such as a magnetic disk, a flexible disk, an optical disk, a compact disk, a Blu-ray (registered trademark) Disc, a DVD, or the like. Furthermore, the portable recording medium in which the program that implements the functions of the parameter estimation unit 121, the first power consumption estimation unit 122, the second power consumption estimation unit 123, and the determination unit 124 is stored may be distributed.

Further, the "unit" of each of the parameter estimation unit 121, the first power consumption estimation unit 122, the second power consumption estimation unit 123, and the determination unit 124 may be interpreted as a "circuit", "step", "procedure", or "process".

Further, the control device 100 may be implemented by a processing circuit. The processing circuit is, for example, a logic Integrated Circuit (IC), a Gate Array (GA), an Application Specific Integrated Circuit (ASIC), or a Field-Programmable Gate Array (FPGA).

In this embodiment, a superordinate concept of the processor and the processing circuit is referred to as "processing circuitry".

That is, each of the processor and the processing circuit is a specific example of the "processing circuitry".

### Reference Signs List

10: outdoor unit; 20: indoor unit; 30: remote controller; 40: centralized controller; 50: room temperature detecting means; 60: outdoor air temperature detecting means; 100: control device; 110: communication device; 120: processor; 121: parameter estimation unit; 122: first power consumption estimation unit; 123: second power consumption estimation unit; 124: determination unit; 130: storage device

## Claims

1. A control device comprising:
a power consumption estimation unit to estimate as a first power consumption, a power consumption generated in a first operation mode in which operation of an air conditioner is suspended at a timing when a room equipped with the air conditioner turns not to be used and the operation of the air conditioner is resumed so that a temperature of the room reaches a preset temperature at a timing when the room turns to be used, and estimate as a second power consumption, a power consumption generated in a second operation mode in which the operation of the air conditioner is continued even while the room is not being used; and
a determination unit to compare the first power consumption with the second power consumption to determine whether to suspend or continue the operation of the air conditioner at the timing when the room turns not to be used.

2. The control device according to claim 1, wherein
the power consumption estimation unit estimates the first power consumption with using a startup time period which is a time period from when the air conditioner resumes operation in the first operation mode until when a temperature of the room reaches the preset temperature, an air conditioning load, and a first correlation function which is a correlation function between the air conditioning load and a power consumption, and
estimates the second power consumption with using a non-use time period which is a time period when the room is not being used, the air conditioning load, and a second correlation function which is a correlation function between the air conditioning load and a power consumption.

3. The control device according to claim 2, wherein
the power consumption estimation unit estimates the startup time period with using the air conditioning load and a startup time period correlation function which is a correlation function between the startup time period and the air conditioning load.

4. The control device according to claim 2, wherein
the power consumption estimation unit estimates the first power consumption with using a first correlation function generated based on a simulation or measured values, and
estimates the second power consumption with using a second correlation function generated based on a simulation or measured values.

5. The control device according to claim 3, wherein
the power consumption estimation unit estimates the startup time period with using a startup time period correlation function generated based on a simulation or measured values.

6. The control device according to claim 1, wherein
the determination unit determines to continue the operation of the air conditioner when there is a person in the room at the timing when the room turns not to be used.

7. The control device according to claim 1, wherein
when the determination unit determines to continue the operation of the air conditioner, the determination unit outputs to a device in the room, a message notifying that the operation of the air conditioner is continuing for energy saving.

8. The control device according to claim 1
estimates the first power consumption with using a startup time period which is a time period from when the air conditioner resumes operation in the first operation mode until when a temperature of the room reaches the preset temperature, a temperature difference between a temperature of the room at a timing when the air conditioner suspends operation and a temperature of the room at a timing when the air conditioner resumes operation, and a first correlation function which is a correlation function between the temperature difference and a power consumption, and
estimates the second power consumption with using a non-use time period which is a time period when the room is not being used, an air conditioning load, and a second correlation function which is a correlation function between the air conditioning load and a power consumption.

9. The control device according to claim 8, wherein
the power consumption estimation unit estimates the temperature difference and estimates the startup time period with using the estimated temperature difference.

10. The control device according to claim 9, wherein
the power consumption estimation unit estimates the temperature difference with using the air conditioning load and a temperature difference correlation function which is a correlation function between the temperature difference and the air conditioning load.

11. The control device according to claim 1, wherein
the power consumption estimation unit estimates the first power consumption and the second power consumption based on a usage schedule of the room specified in advance.

12. The control device according to claim 1, wherein
the power consumption estimation unit estimates the first power consumption and the second power consumption based on a usage schedule of the room specified at any time.

13. A control method comprising:
estimating as a first power consumption, a power consumption generated in a first operation mode in which operation of an air conditioner is suspended at a timing when a room equipped with the air conditioner turns not to be used and the operation of the air conditioner is resumed so that a temperature of the room reaches a preset temperature at a timing when the room turns to be used, and estimating as a second power consumption, a power consumption generated in a second operation mode in which the operation of the air conditioner is continued even while the room is not being used, by a computer; and
comparing the first power consumption with the second power consumption to determine whether to suspend or continue the operation of the air conditioner at the timing when the room turns not to be used, by the computer.
